# EUROPEAN PATENT APPLICATION

(11) **EP 2 306 551 A1**
(43) Date of publication of application: **06.04.2011**
(21) Application number: 09275077.7
(22) Date of filing: 15.09.2009
(51) Int. Cl.: H01M 2/10, H01M 10/42, H01M 10/44

(54) **Power and Data Unit**

(71) Applicant: BAE Systems PLC, 6 Carlton Gardens London SW1Y 5AD (GB)
(72) Inventor: The designation of the inventor has not yet been filed
(74) Representative: Thomas, Michael Andrew

(57) **Abstract**

A power and data storage unit is provided. The unit comprises a first battery together with data storage means.

The data storage means is mounted on the first battery, and is configured to receive data from a device powered by the unit.

## Description

The present invention relates to a modular power unit for an unmanned underwater vehicle.

An unmanned underwater vehicle may be used to undertake a variety of different missions. In general, it is desirable to minimise the weight of such a vehicle in order to either increase the pay load that may be carried by the vehicle or to maximise the potential duration of the mission as the power required by the reduced weight would correspondingly be reduced. In contrast, circumstances may be presented that require a larger power unit to be fitted to the vehicle to extend the operation of the vehicle even if said increase in power results in an increased weight which, in turn, represents a reduction in efficiency.

Certification of power units to be used in extreme environments can be onerous, time consuming and expensive. It is, therefore, desirable to develop a power unit having enhanced flexibility which is able to readily balance longevity/duration with weight of the overall vehicle rather than having to achieve certification of a number of different power units.

Furthermore, it is desirable to effect a rapid turn around time between missions, especially in terms of data transfer and recharge

According to a first aspect, the present invention provides a power and data storage unit comprising:
a first battery; and
data storage means, mounted on the first battery, configured to receive data from a device powered by the unit.

By providing a combined power and data storage unit a flexibility of operation can be achieved whereby data gathered throughout a mission undertaken by a device comprising the unit can be transferred to the data storage means during the mission. The data storage means together with its contents can be rapidly replaced together with the power unit thus avoiding the need for an onerous transfer period at the base station. Rather, the vehicle can be re-launched to continue its mission or begin a new mission within minutes, preferably thirty minutes, of returning to the base station at the end of a previous mission.

The power unit may comprise a second battery, interconnecting means located between the first battery and the second battery for providing an electrical connection therebetween and sealing means, positioned about the first and second batteries, to inhibit water ingress into the power unit.

The unit may be configured to enable substantially simultaneous charging of each battery. The, or each, battery may be a lithium battery.

The device may be a maritime vehicle. Accordingly, there may be provided an unmanned underwater vehicle, comprising a power unit of the aforementioned type, the vehicle may comprise a data port to which the data storage means can be connected to effect transfer of data between the vehicle and the data storage means.

The present invention is now described in more detail, with reference to the accompanying drawings, in which:
Figure 1 represents an isometric view of a cross section of an unmanned underwater vehicle (UUV) taken on the centre line of said vehicle;
Figure 2 represents a side view of the modular power unit illustrated in Figure 1; and
Figure 3 represents a rearmost isometric view of a single module of the power unit of Figure 1;
Figure 4 represents a front view of the module illustrated in Figure 3;
Figure 5 represents a separation plate located between each power module; and
Figure 6 represents cross section of a separation plate having two peripheral covers connected thereto.

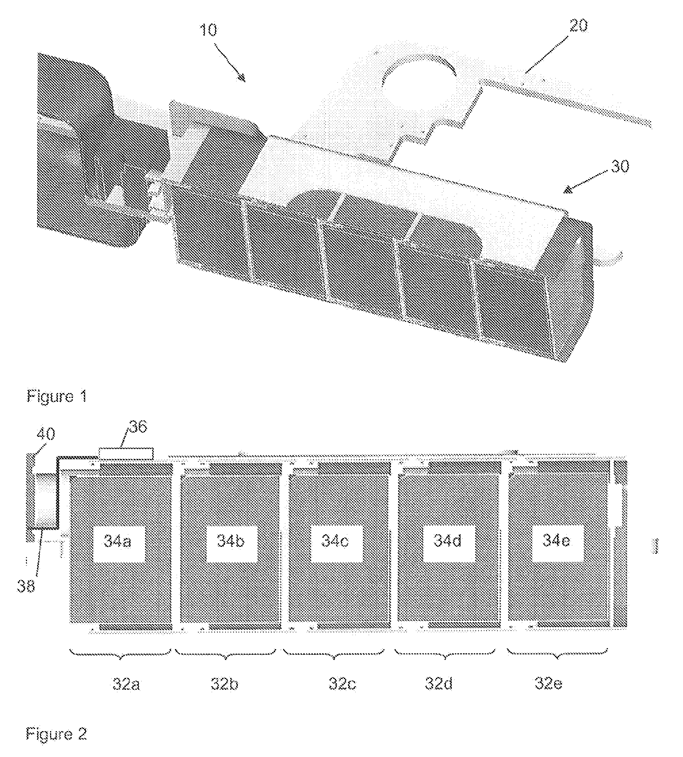

Figure 1 illustrates a cut away portion of an unmanned underwater vehicle (UUV) 10 of the type having a support plate 20 to provide structural rigidity for the vehicle 10. In the illustrated embodiment, power is provided by modular power unit 30 centrally located at a rearmost portion of the vehicle 10 as shown.

The modular power unit 30 is illustrated in greater detail in Figures 2 to 6.

The modular power unit 30 comprises a number of connectable modules 32a-e, in this example five, which can be connected to one another in series as shown to increase or decrease the level of energy available for any particular given mission or configuration of vehicle 10. Each module 32 comprises a battery 34 (more clearly shown in Figure 2). In this example, each battery 34 is provided by a single lithium battery, however, each battery 34 may comprise more than one individual cells wired together in series or parallel or a combination thereof.

A first module 32a comprises a data logging device 36 having a cable 38 attached thereto to facilitate connectivity to an interface block 40 mounted within the vehicle 10. The cable 38 is releasably connected to the interface block 40 via cooperative connectors (not shown) e.g. a plug and socket arrangement.

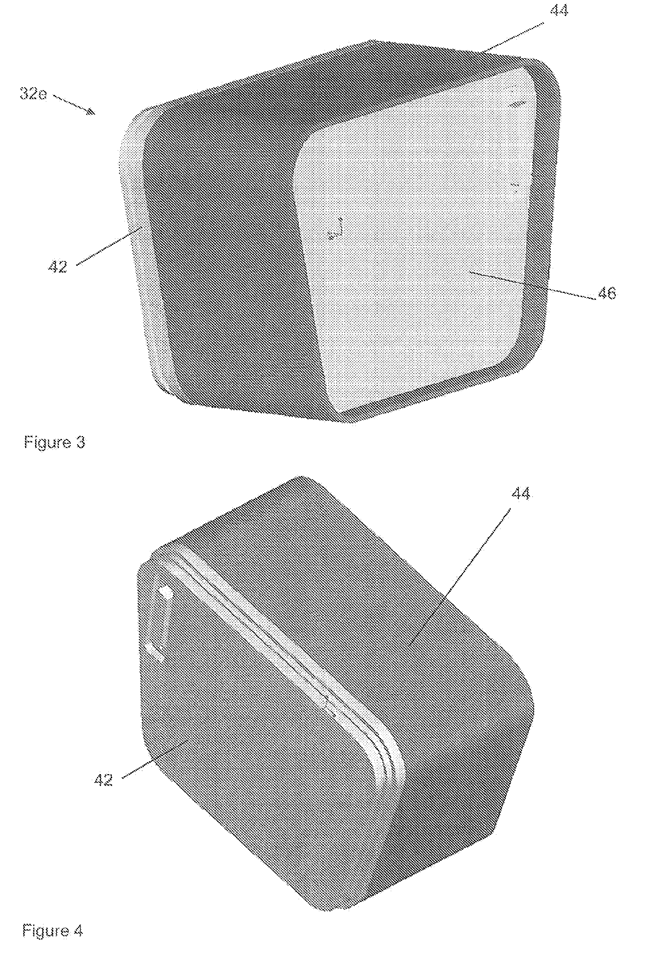

An individual module 32 is illustrated in Figures 3 and 4. Each module 32, comprises a separation plate 42 and a peripheral cover 44. The module 32e represented in Figure 3 is the rearmost module, and thus comprises an end plate 46.

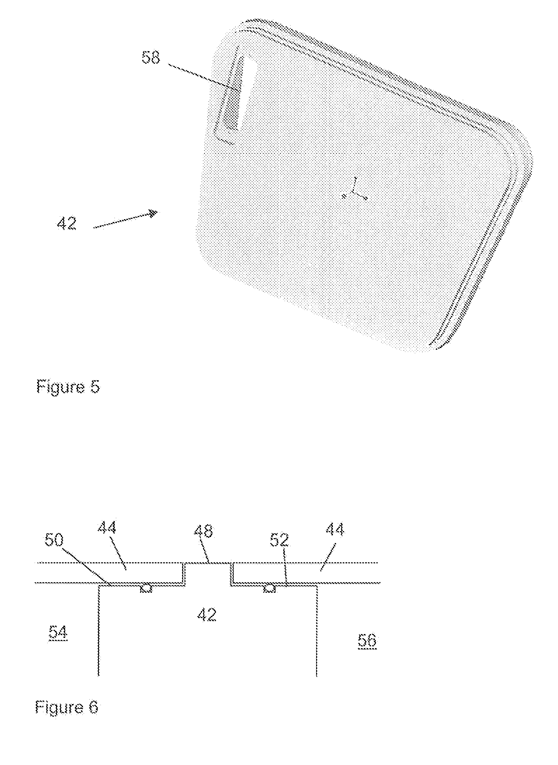

The separation plate 42 is shown in more detail in Figures 5 and 6. The separation plate 42 comprises an external rim 48 describing the same locus as the peripheral cover 44. A rebate 50 is provided adjacent to the external rim 48, the rebate 50 is configured to receive a first peripheral cover 44. A second rebate 52 is provided on an opposing surface of the separation plate 42 and is configured to receive a second peripheral cover 44. Grooves for receiving a sealing member such as an o-ring are, preferably, formed in each rebate as illustrated and/or in a corresponding portion of each peripheral cover 44. Once first and second peripheral covers 44 are assembled in conjunction with the separation plate 42, first and second cavities 54, 56 are thereby defined for receiving respective batteries 34. An aperture 58 is provided through a thickness of the separation plate 42 thus enabling connectivity between adjacent batteries 34 received by respective cavities 54, 56.

A modular construction is, therefore, assembled to form the modular power unit 30. The power unit 30 can thus be tailored, as required, for any particular configuration or layout of UUV 10 provided to perform any particular mission.

A UUV 10 of the aforementioned type is preferably provided with five such modules 32 but is generally intended to be operated with three modules 32 installed in the UUV for the majority of missions. It will be appreciated, however, that under extreme circumstances it is desirable to install more modules, say five or even seven, to accommodate the mission requirements. Furthermore, it may be desirable to provide fewer modules 32, say one or two. Such modifications can readily be undertaken at a launch site of the vehicle 10. The flexibility of a modular power unit 30 as herein described is clearly quite advantageous.

Notably, without such a flexible modular power system it would be necessary to accept a non-optimal power pack or to achieve certification for power units of different sizes. Certification of this type can be particularly onerous and is, therefore, preferably avoided. Furthermore, if there were different types of batteries, each having significant weight and bulk associated therewith, transportation of said batteries could be somewhat problematic. In contrast, it is relatively straight forward to transport a greater number of modules 32 thus improving the flexibility and efficiency of the UUV 10.

The configuration of connectivity between the modules 32 enables each battery 34 to be charged individually and, as a consequence, the charging time is the same whether a single module or five modules are being charged in any one period. Whilst additional power is required to achieve this, valuable time between missions can be kept to a minimum and, as such, this feature represents a particular advantage in the field.

In operation, during a mission preparation stage, a mission plan is downloaded from a base station, from which the vehicle is launched, to an internal data storage device of the vehicle 10 via an external data link. During this mission preparation stage, the vehicle 10 is preferably powered by an external source. Once the preparation stage is complete, the external data link and the external power source are disconnected and a modular power unit 30 of the aforementioned type is connected to the vehicle 10. The modular power unit 30 comprises a data logger 36 pre-formatted with blank files, ready to receive data acquired during the mission.

Alternatively or in addition, the mission plan may be downloaded from the base station to data logger 36 and transferred to the internal data storage device once the modular power unit 30 is connected to the vehicle.

The vehicle 10 is then launched into the water, the mission is undertaken and data is acquired and stored by the vehicle. If the vehicle 10 is operated in a supervisory mode, some of the acquired data may be monitored either intermittently or continuously by an operator located at the base station. Key data, such as attitude and navigation parameters and system status and health is recorded to the vehicle's internal data storage device but the acquired data, such as acoustic and/or optical sensor data together with a copy of the associated navigation data and time (for reconstruction purposes) may be written to the internal data storage device of the vehicle 10 but are also written to the removable data logger 36 either at the time of acquisition or whilst the vehicle 10 is returning to the base station.

Upon recovery of the vehicle 10, the expended modular power unit 30 is removed from the vehicle 10 and is replaced by a new unit 30 which is fully charged and comprises a blank data logger 36, pre-formatted with blank files. The data logger 36 may also be pre-loaded with the updated or new mission plan to further reduce time between recovery and launch of the vehicle 10, the so called "turnaround" time of the vehicle. In so doing, the turnaround time of the vehicle is preferably reduced to a 30 minute interval.

It is, therefore, unnecessary to reconnect the vehicle 10 to the external data link, at least for the purpose of downloading the acquired data, although reconnection to the external data link may be effected to directly download the updated or new mission plan directly to the internal data storage device of the vehicle.

Content of the data logger 36 may be accessed in isolation of the vehicle 10 thus enabling subsequent operations to be undertaken (i.e. collection of new data) whilst data analysis of a previous mission is being undertaken. For example, the vehicle 10 may return to the same field to continue a mission after having to return to replenish its power supply or additional detailed analysis may be necessary at a mid-point of a mission, and so the earlier less detailed data may be returned for analysis whilst the detailed part of the mission is undertaken. Alternatively, a first mission may have been finished and it is imperative that a second mission is undertaken without any delay (that may be associated with the time taken to download the data acquired from the first mission).

In general terms, the technique and apparatus of the present invention permits information to be returned and analysed substantially immediately, so that some information can be analysed whilst other information is still being collected. This is in contrast to conventional data collection, whereby a delay would be incurred whilst the vehicle completes a potentially longer mission and then all data is downloaded from the vehicle before it can be re-launched to undertake a subsequent mission. Flexibility in strategy is, therefore, enhanced.

By providing a modular power unit able to comprise a number of battery components which can be charged individually, a flexibility of operation can be achieved whereby the capacity of the power unit is adjusted to parameters of the particular mission to be undertaken. Furthermore, by providing a data port to which data storage means can be connected, data gathered throughout the mission can be transferred to the data storage means during the mission. The data storage means together with its contents can be rapidly replaced together with the power unit thus avoiding the need for an onerous transfer period at the base station. Rather, the vehicle can be re-launched to continue its mission or begin a new mission within minutes of returning to the base station at the end of a previous mission.

## Claims

1. A power and data storage unit comprising:
a first battery; and
data storage means, mounted on the first battery, configured to receive data from a device powered by the unit.

2. A power unit according to Claim 1, comprising:
a second battery;
interconnecting means located between the first battery and the second battery for providing an electrical connection therebetween; and
sealing means positioned about the first and second batteries to inhibit water ingress into the power unit.

3. A power unit according to Claim 1 or Claim 2, wherein the unit is configured to enable substantially simultaneous charging of each battery.

4. A power unit according to any preceding claim, wherein the, or each, battery is a lithium battery.

5. A power unit according to any preceding claim, wherein the device is a maritime vehicle.

6. An unmanned underwater vehicle, comprising a power unit according to any preceding claim.
